# EUROPEAN PATENT APPLICATION

(11) **EP 4 442 761 A1**
(43) Date of publication of application: **09.10.2024**
(21) Application number: 22901077.2
(22) Date of filing: 15.11.2022
(51) Int. Cl.: C08L 67/02, C08G 63/193, C08L 73/02, C09D 167/02, C09D 173/02

(54) **POWDERY COMPONENT, RESIN COMPOSITION FOR COATING USE, AND COATING FILM**

(30) Priority: 30.11.2021 JP 2021194546
(71) Applicant: FUJIFILM Corporation, Tokyo 106-8620 (JP)
(72) Inventor: OGAWA Taiki, Ashigarakami-gun, Kanagawa 258-8577 (JP); HIRONAKA Koji, Ashigarakami-gun, Kanagawa 258-8577 (JP); NOZOE Yutaka, Ashigarakami-gun, Kanagawa 258-8577 (JP); YAMASHITA Junko, Ashigarakami-gun, Kanagawa 258-8577 (JP); ARAI Michio, Ashigarakami-gun, Kanagawa 258-8577 (JP); USHIROGATA Keisuke, Ashigarakami-gun, Kanagawa 258-8577 (JP)
(74) Representative: HGF
(86) International application number: PCT/JP2022/042408
(87) International publication number: WO 2023/100644

(57) **Abstract**

An object of the present invention is to provide a powder component of which a coating film having excellent transparency can be formed, a resin composition for coating, and a coating film. A powder component of the present invention is a powder component containing a polyarylate containing a repeating unit represented by Formula (A-I) and a repeating unit represented by Formula (A-II), and a compound that is different from the polyarylate and that has a repeating unit represented by Formula (B), in which a value obtained by subtracting a measured value 1 from a measured value 2 is 2,000 ppm by mass or less. Measured value 1: a proportion of a mass of a compound represented by Formula (C) in the powder component with respect to a whole mass of the powder component. Measured value 2: a proportion of the mass of the compound represented by Formula (C) in a mixture obtained by mixing the powder component with diethylamine with respect to the whole mass of the powder component.

## Description

### BACKGROUND OF THE INVENTION

### 1. Field of the Invention

The present invention relates to a powder component, a resin composition for coating, and a coating film.

### 2. Description of the Related Art

A polyarylate containing a repeating unit derived from an aromatic diol compound and a repeating unit derived from an aromatic dicarboxylic acid comwpound, and a polycarbonate containing a repeating unit derived from an aromatic diol compound and a repeating unit derived from phosgene are excellent in heat resistance, mechanical strength, and the like, and are industrially widely used.

For example, JP2008-031347A describes a resin for forming a coating film, containing, as a main component, a polyester composed of a residue of a divalent carboxylic acid having a biphenyl structure, a diphenyl ether structure, and a cyclohexane structure, and a residue of a dihydric phenol, in which, by controlling a free divalent carboxylic acid to 0.01 to 300 ppm, electrical properties can be stabilized in a case of being applied to a capacitor, an electrophotographic photoreceptor, and the like.

### SUMMARY OF THE INVENTION

The present inventors have found that, in a case where a coating film is formed of a powder component containing a polyarylate in the related art, the transparency of the coating film is deteriorated.

Therefore, an object of the present invention is to provide a powder component of which a coating film having excellent transparency can be formed, a resin composition for coating, and a coating film.
[1] A powder component comprising
   a polyarylate containing a repeating unit represented by Formula (A-I) and a repeating unit represented by Formula (A-II), and
   a compound that is different from the polyarylate and has a repeating unit represented by Formula (B),
   in which a value obtained by subtracting a measured value 1 from a measured value 2 is 2,000 ppm by mass or less.
[2] The powder component according to [1], in which L²¹, L³¹, and L⁴¹ are a group represented by any of Formulae (L-1) to (L-5) or a group formed by a combination of the groups.
[3] The powder component according to [2], in which L²¹, L³¹, and L⁴¹ are the group represented by Formula (L-1).
[4] A resin composition for coating, comprising the powder component according to any one of [1] to [3], and a solvent.
[5] A coating film formed of the resin composition for coating according to [4].

According to the present invention, a powder component of which a coating film having excellent transparency can be formed, a resin composition for coating, and a coating film can be provided.

### DESCRIPTION OF THE PREFERRED EMBODIMENTS

In the present specification, numerical ranges represented by "to" include numerical values before and after "to" as lower limit values and upper limit values.

In the present specification, a substituent, a linking group, or the like (hereinafter, also referred to as "substituent or the like") for which substitution or unsubstitution is not specified may have an appropriate substituent on the group. Therefore, in the present specification, even in a case of being simply described as "... group" (for example, "alkyl group"), the "... group" (for example, "alkyl group") includes not only an aspect having no substituent (for example, "unsubstituted alkyl group") but also an aspect having a further substituent (for example, "substituted alkyl group"). The same shall be applied to a compound which is not specified in the present specification regarding whether to be substituted or unsubstituted. As the substituent, a group shown as an example by a substituent T described later is preferable. In addition, unless otherwise specified, it is preferable that the substituents and the like do not have a substituent in the group.

In the present specification, in a case where a plurality of substituents or the like are present or a plurality of substituents or the like are simultaneously or alternatively defined, the respective substituents or the like may be the same or different from each other. In addition, unless specified otherwise, in a case where a plurality of substituents or the like are adjacent to each other, the substituents may be linked or fused to each other to form a ring.

In the present specification, in a case where a polymer includes a plurality of constitutional components having the same representation (represented by the same general formula), the respective constitutional components may be the same or different from each other.

### [Powder component]

The powder component according to the embodiment of the present invention is a powder component containing a polyarylate containing a repeating unit represented by Formula (A-I) and a repeating unit represented by Formula (A-II), and a compound (hereinafter, also referred to as a "compound B") that is different from the polyarylate and that has a repeating unit represented by Formula (B), in which a value (hereinafter, also referred to as "X value") obtained by subtracting a measured value 1 from a measured value 2 is 2,000 ppm by mass or less.

The measured value 1: a proportion of a mass of a compound represented by Formula (C) (hereinafter, also referred to as a "compound C") in the powder component with respect to a whole mass of the powder component.

The measured value 2: a proportion of the mass of the compound C in a mixture obtained by mixing the powder component with diethylamine with respect to the whole mass of the powder component.

In the present invention, the "powder component" means a powdery component. The powder form also includes a granular form and a pellet form. In addition, even in a case where the powder component contains a liquid component, it is included in the powder component as long as the powder component is in a powder form as a whole.

Examples of the feature point of the powder component according to the embodiment of the present invention include a point that the X value is in a predetermined range. As will be described later, the X value substantially represents a content proportion of the compound B, and the present inventors have found that, by controlling a range of the X value (in other words, the content proportion of the compound B), the transparency of the coating film is excellent in a case where a coating film is formed using the powder component.

Hereinafter, the fact that the transparency of the coating film is more excellent is also referred to that the effect of the present invention is more excellent.

Hereinafter, the powder component according to the embodiment of the present invention will be described in detail. First, an X value will be described, and then compounds contained in the powder component will be described in detail.

### <X value>

The X value is a value obtained by subtracting the measured value 1 from the measured value 2.

As will be described later, since an acid anhydride group (-CO-O-CO-) is included in the compound B, in a case of being mixed with diethylamine, the acid anhydride group moiety is cleaved to generate a group represented by -CO-N(C₂H₅) and a group represented by HO-CO-. The compound C, which will be described later, has a group (a group represented by - CO-N(C₂H₅) and a group represented by HO-CO-) generated by the cleavage of the above-described compound B. That is, the compound C is a compound derived from a repeating unit represented by Formula (B) in the compound B, which is generated by cleavage of the acid anhydride group by diethylamine. Therefore, the mass of the compound C generated by the mixing with the diethylamine substantially corresponds to the mass of the compound B in the powder component, and the X value substantially represents the proportion of the mass of the compound B to the whole mass of the powder component.

The measured value 1 is a proportion (%) of the mass of the compound C in the powder component to the whole mass of the powder component.

The measured value 1 is a value for excluding the case where the mass of the compound C originally contained in the powder component (for example, a compound derived from a residual monomer, or the like) is added to the X value instead of the compound C generated by the decomposition of the compound B by diethylamine in a case of measuring the measured value 2. In other words, the measured value 1 is the blank value.

The measured value 2 is a proportion of the mass of the compound C in the mixture obtained by mixing the powder component with the diethylamine, to the whole mass of the above-described powder component.

The measured value 2 is a value obtained by preparing a mixture by mixing the powder component with the diethylamine, decomposing the compound B contained in the powder component by the diethylamine, determining the mass of the compound C in the mixture, and measuring the proportion of the mass of the obtained compound C to the whole mass of the powder component. As the measured value 2, a proportion (%) including the total mass of the compound C originally included in the powder component and the compound C which is a decomposition product of the compound B is calculated.

Therefore, the X value corresponding to the proportion of the mass of the compound C which is a decomposition product of the compound B can be calculated by subtracting the measured value 1, which is the blank value, from the measured value 2 (measured value 2 - measured value 1).

The X value is 2,000 ppm by mass or less, preferably 1,500 ppm by mass or less, more preferably 1,000 ppm by mass or less, still more preferably 500 ppm by mass or less, and even still more preferably 100 ppm by mass or less. The lower limit is often more than 0 ppm by mass, and from the viewpoint of easily manufacturing the powder component, the lower limit is preferably 0.1 ppm by mass or more, more preferably 1 ppm by mass or more, and still more preferably 10 ppm by mass or more.

Examples of a measuring method of the measured value 1 include a method in which (1) dissolving a powder component by adding a good solvent such as THF, (2) re-precipitating a polyarylate by adding a poor solvent such as MeOH, and (3) measuring the supernatant solution by HPLC.

Specifically, 50 mg of the powder component is dissolved in 2 mL of tetrahydrofuran. Thereafter, methanol is added thereto to make the volume 10 mL, and the supernatant obtained by re-precipitating the polyarylate is filtered through a filter to obtain a filtrate. Using the obtained filtrate, in HPLC analysis, an ODS column is used as a separation column, water containing phosphoric acid and acetonitrile are used as an eluent, and a sample injection amount is 10 µL. A photodiode array detector is used as the detection device, and the detection is carried out at a detection wavelength of 254 nm to obtain a proportion (%) of the mass of the compound C to the whole mass of the powder component.

In a case where the mass of the compound C is detected by the HPLC analysis, a calibration curve showing a relationship between the area of the peak derived from the compound C and the mass of the compound may be created in advance, the mass content of the compound C may be calculated from the obtained HPLC analysis result, and the proportion of the mass of the compound C to the whole mass of the powder component may be calculated by considering the sample injection amount of the HPLC.

A measuring method of the measured value 2 includes (1) dissolving a powder component by a good solvent such as THF and adding diethylamine, (2) re-precipitating a polyarylate by adding a poor solvent such as MeOH, and (3) measuring the supernatant solution by HPLC.

Specifically, 50 mg of the powder component is dissolved in 2 mL of tetrahydrofuran, and then 10 µL of diethylamine is added thereto. Thereafter, methanol is added thereto to make the volume 10 mL, and the supernatant obtained by re-precipitating the polyarylate is filtered through a filter to obtain a filtrate. Using the obtained filtrate, in HPLC analysis, an ODS column is used as a separation column, water containing phosphoric acid and acetonitrile are used as an eluent, and a sample injection amount is 10 µL. A photodiode array detector is used as the detection device, and the detection is carried out at a detection wavelength of 254 nm to obtain the mass of the compound C in the mixture obtained by mixing the powder component and diethylamine, and to obtain the proportion (%) of the mass of the compound C to the whole mass of the powder component (mass of the powder component charged in the above-described mixture).

In a case where the content of the compound C is detected by the HPLC analysis, the content of the compound C may be calculated using a calibration curve as described above.

Examples of a method of adjusting the X value include a method of separately adding the compound B, a method of increasing the purity of the raw material for producing the polyarylate, a method of adjusting the polymerization conditions of the polyarylate, and an amine treatment, which will be described later.

As a method of using the above-described high-purity raw material, for example, it is preferable that the purity of the compound b from which the repeating unit represented by Formula (A-II) is derived, is high. Examples of the structure of the compound b include a compound represented by Formula (A-IIb).

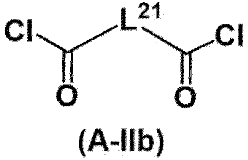

In a case where 4,4'-biphenyldicarbonyl chloride is used as the raw material, it is preferable to use a raw material having a low content of 4,4'-biphenyldicarboxylic acid and/or 4-(4-carboxyphenyl)-benzoyl chloride with respect to the whole mass of 4,4'-biphenyldicarbonyl chloride. Specifically, the content of the 4,4'-biphenyldicarboxylic acid and/or the 4-(4-carboxyphenyl)-benzoyl chloride is preferably 5% by mass or less, more preferably 1% by mass or less, and still more preferably 0.5% by mass or less with respect to the whole mass of the 4,4'-biphenyldicarbonyl chloride. The lower limit thereof is usually 0% by mass or more with respect to the whole mass of the 4,4'-biphenyldicarbonyl chloride.

The purity of the compound b is preferably 98.5% or more, more preferably 99.0% or more, and still more preferably 99.5% or more. The upper limit thereof is usually 100% or less. The above-described purity can be measured using, for example, high performance liquid chromatography (HPLC).

In addition, the amine treatment is a treatment of adding an amine compound to the powder component to decompose the compound B. By the above-described amine treatment, the compound B is decomposed, and the content of the compound B in the powder component can be reduced. From the viewpoint of easily reacting with the compound B, the above-described amine compound is preferably a primary amine compound or a secondary amine compound, and from the viewpoint of suppressing a side reaction with the polyarylate, the above-described amine compound is more preferably a secondary amine compound. In addition, from the viewpoint of removability of the secondary amine compound and the decomposition product of the compound B, the molecular weight of the amine compound is preferably small, and the amine compound is more preferably diethylamine.

### <Polyarylate>

The powder component contains a polyarylate containing a repeating unit represented by Formula (A-I) and a repeating unit represented by Formula (A-II).

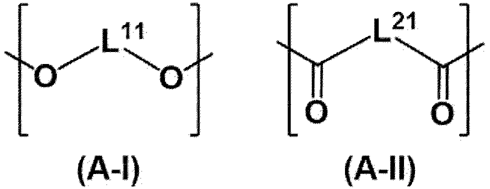

In Formula (A-I), L¹¹ represents a group represented by -Ar¹¹-(L¹²-Ar¹²)ₙ-. Ar¹¹ and Ar¹² each independently represent an aromatic hydrocarbon ring. L¹² represents a single bond, an oxygen atom, a sulfur atom, or -C(R¹¹)(R¹²)-. R¹¹ and R¹² each independently represent a hydrogen atom, an alkyl group, or an aryl group. R¹¹ and R¹² may be bonded to each other to form a ring. n represents an integer of 1 or more.

In Formula (A-II), L²¹ represents a group represented by -X²¹-(L²²-X²2)ₘ-. X²¹ and X²² each independently represent an aromatic hydrocarbon ring, an aliphatic hydrocarbon ring, or a linear hydrocarbon group. L²² represents a single bond, an oxygen atom, a sulfur atom, or -C(R²¹)(R²²)-. R²¹ and R²² each independently represent a hydrogen atom or an alkyl group. R²¹ and R²² may be bonded to each other to form a ring. m represents an integer of 0 or more.

L¹¹ represents a group represented by -Ar¹¹-(L¹²-Ar¹²)ₙ-. Ar¹¹ and Ar¹² each independently represent an aromatic hydrocarbon ring.

The above-described aromatic hydrocarbon ring may be a monocyclic ring or a polycyclic ring.

The number of carbon atoms of the above-described aromatic hydrocarbon ring is preferably in a range of 6 to 30, more preferably in a range of 6 to 12, and still more preferably in a range of 6 to 8.

The above-described aromatic hydrocarbon ring may have a substituent. Examples of the above-described substituent include groups shown as an example by the substituent T, and an alkyl group, a cycloalkyl group, or an aryl group is preferable.

Examples of the above-described aromatic hydrocarbon ring include a benzene ring, a naphthalene ring, and an anthracene ring, and a benzene ring is preferable.

L¹² represents a single bond, an oxygen atom, a sulfur atom, or -C(R¹¹)(R¹²)-.

L¹² is preferably a single bond or -C(R¹¹)(R¹²)-, and more preferably -C(R¹¹)(R¹²)-.

R¹¹ and R¹² each independently represent a hydrogen atom, an alkyl group, or an aryl group. R¹¹ and R¹² may be bonded to each other to form a ring.

The above-described alkyl group may be linear, branched, or cyclic.

The number of carbon atoms in the alkyl group is preferably 1 to 30, more preferably 1 to 15, and even more preferably 1 to 5.

Examples of the above-described alkyl group include a methyl group, an ethyl group, a propyl group, a butyl group, and a methylbutyl group.

The above-described aryl group may be monocyclic or polycyclic.

The number of carbon atoms in the above-described aryl group is preferably 6 to 30, more preferably 6 to 12, and still more preferably 6 to 8.

Examples of the above-described aryl group include a phenyl group, a naphthyl group, an anthryl group, a pyrenyl group, a phenanthrenyl group, a methylphenyl group, a dimethylphenyl group, a biphenyl group, a fluorenyl group, and the phenyl group is preferable.

It is preferable that at least one of R¹¹ or R¹² represents an alkyl group, it is more preferable that both R¹¹ and R¹² represent an alkyl group, and it is still more preferable that one of R¹¹ or R¹² represents a linear alkyl group and the other represents a branched alkyl group.

Examples of the ring formed by bonding R¹¹ and R¹² to each other include an aromatic hydrocarbon ring and an aliphatic hydrocarbon ring. Examples of the above-described aromatic hydrocarbon ring and the above-described aliphatic hydrocarbon ring include an aromatic hydrocarbon ring and an aliphatic hydrocarbon ring, which will be described later, represented by X²¹ and X²². In addition, it is preferable that R¹¹ and R¹² do not form a ring.

n represents an integer of 1 or more.

n is preferably an integer of 1 to 4, more preferably 1 or 2, and still more preferably 1.

In a case where a plurality of Ar¹²'s are present, the plurality of Ar¹²'s may be the same as or different from each other.

In a case where a plurality of L¹²'s are present, the plurality of L¹²'s may be the same as or different from each other.

In Formula (A-II), L²¹ represents a group represented by -X²¹-(L²²-X²²)ₘ-. X²¹ and X²² each independently represent an aromatic hydrocarbon ring, an aliphatic hydrocarbon ring, or a linear hydrocarbon group.

Examples of the above-described aromatic hydrocarbon ring include the aromatic hydrocarbon ring represented by Ar¹¹ and Ar¹² described above.

The above-described aliphatic hydrocarbon ring may be a monocyclic ring or a polycyclic ring.

The number of carbon atoms in the above-described aliphatic hydrocarbon ring is preferably 3 to 30, and more preferably 3 to 6.

Examples of the above-described aliphatic hydrocarbon ring include a cyclopropane ring, a cyclobutane ring, a cyclopentane ring, and a cyclohexane ring.

The number of carbon atoms in the above-described linear hydrocarbon group is preferably 1 to 10 and more preferably 1 to 5.

As the above-described linear hydrocarbon group, a linear alkyl group is preferable.

L²² represents a single bond, an oxygen atom, a sulfur atom, or -C(R²¹)(R²²)-.

L²² is preferably a single bond, an oxygen atom, or -C(R²¹)(R²²)-, and more preferably a single bond or an oxygen atom.

R²¹ and R²² each independently represent a hydrogen atom or an alkyl group. R²¹ and R²² may be bonded to each other to form a ring.

Examples of R²¹ and R²² include a hydrogen atom or an alkyl group, which is represented by R¹¹ and R¹² described above. In addition, examples of the ring formed by bonding R²¹ and R²² to each other include the ring formed by bonding R¹¹ and R¹² to each other described above.

m represents an integer of 0 or more.

m is preferably an integer of 0 to 3, more preferably 0 or 1, and still more preferably 1.

Examples of the polyarylate include a polyarylate containing a repeating unit represented by Formula (A-I) and a repeating unit represented by Formula (A-II).

First, specific examples of the repeating unit represented by Formula (A-1) are shown.

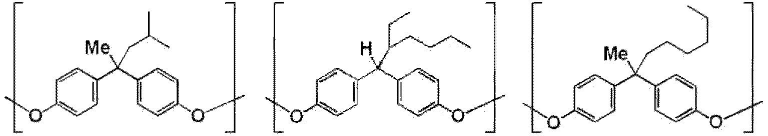

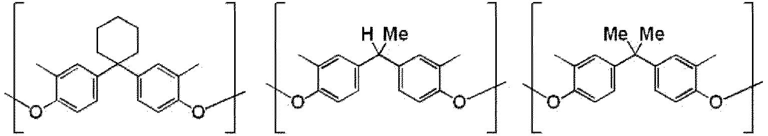

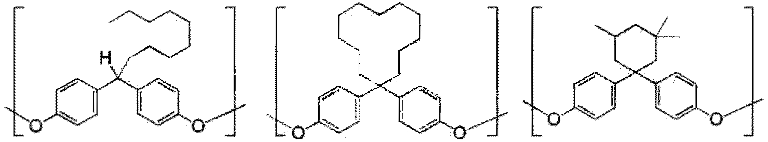

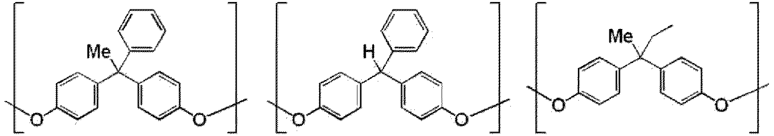

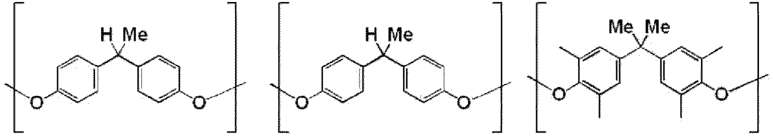

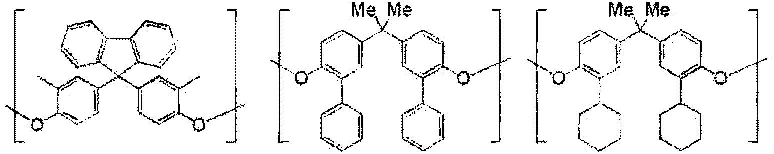

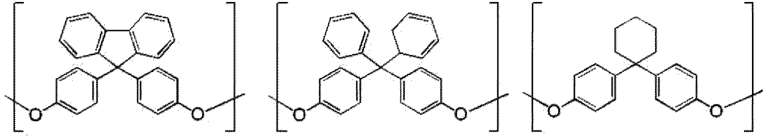

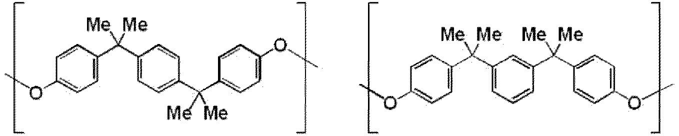

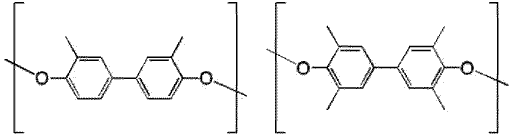

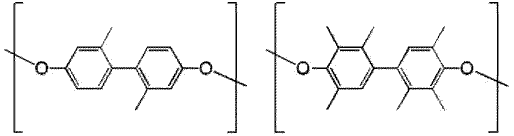

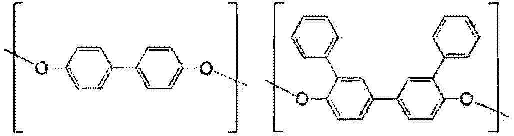

Specific examples of the repeating unit represented by Formula (A-II) will be shown below.

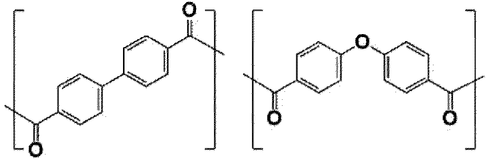

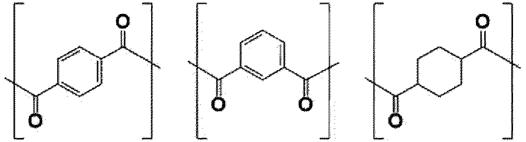

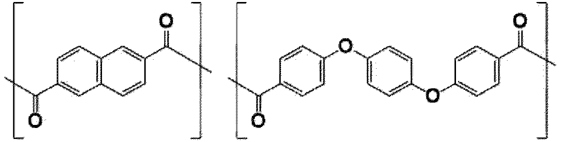

A weight-average molecular weight of the polyarylate is preferably 50,000 to 250,000, more preferably 80,000 to 180,000, and still more preferably 100,000 to 150,000.

The above-described weight-average molecular weight is a molecular weight in terms of polystyrene as measured by gel permeation chromatography (GPC).

The polyarylate may be used alone or in combination of two or more kinds thereof.

The content of the polyarylate is preferably 90% by mass or more, more preferably 95% by mass or more, still more preferably 99% by mass or more, and particularly preferably 99.9% by mass or more with respect to the whole mass of the powder component. The upper limit is preferably less than 100% by mass with respect to the whole mass of the powder component.

The content of the repeating unit represented by Formula (A-I) is preferably 10% to 70% by mass, more preferably 20% to 65% by mass, and still more preferably 30% to 60% by mass with respect to all repeating units of the polyarylate.

The content of the repeating unit represented by Formula (A-II) is preferably 10% to 60% by mass, more preferably 20% to 55% by mass, and still more preferably 30% to 50% by mass with respect to all repeating units of the polyarylate.

### <Compound B>

The powder component contains a compound B.

The compound B is a compound different from the polyarylate, is a compound having a repeating unit represented by Formula (B), and is a compound generated by reacting compounds b with each other, from which the repeating unit represented by Formula (A-II) is derived. The compound B is a compound different from the polyarylate, and is preferably a compound having only the repeating unit represented by Formula (B) as the repeating unit.

The fact that the compound B is different from the polyarylate means that the compound B does not have the repeating unit represented by Formula (A-I) and the repeating unit represented by Formula (A-2).

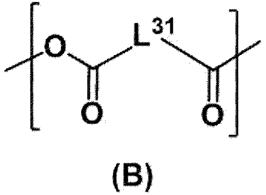

In Formula (B), L³¹ represents a group represented by -X³¹-(L³²-X³²)_{q}-. X³¹ and X³² each independently represent an aromatic hydrocarbon ring, an aliphatic hydrocarbon ring, or a linear hydrocarbon group. L³² represents a single bond, an oxygen atom, a sulfur atom, or - C(R³¹)(R³²)-. R³¹ and R³² each independently represent a hydrogen atom or an alkyl group. R³¹ and R³² may be bonded to each other to form a ring. q represents an integer of 0 or more.

L³¹ represents a group represented by -X³¹-(L³²-X³²)_{q}-.

Examples of L³¹ include the group represented by L²¹. Specifically, in -X³¹-(L³²-X³²)_{q}- represented by L³¹, X³¹, L³², X3², and q have the same meanings as X²¹, L²², X²², and m, respectively, and suitable aspects thereof are also the same.

Examples of the repeating unit represented by Formula (B) include the following repeating units.

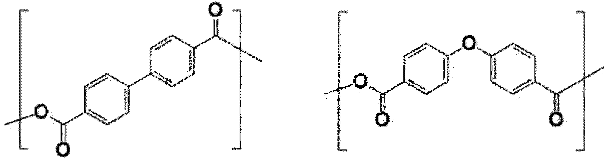

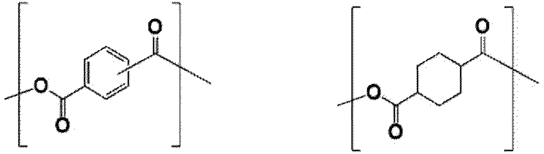

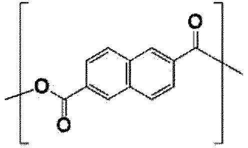

A molecular weight of the compound B is preferably 450 to 30,000, more preferably 700 to 20,000, and still more preferably 1,000 to 10,000. In a case where the compound B has a distribution of molecular weights, the molecular weight is a weight-average molecular weight. The above-described weight-average molecular weight can be measured by the same method as the weight-average molecular weight of the polyarylate described above.

The compound B may be used alone or in combination of two or more kinds thereof.

The content of the compound B is preferably substantially the same as the content of the compound C, which will be described later.

### <Compound C>

The compound C is a compound B-derived decomposition product generated by mixing a powder component and diethylamine, and is a compound represented by Formula (C).

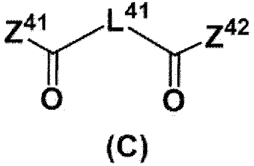

In Formula (C), Z⁴¹ and Z⁴² each independently represent -OH or -N(C₂H₅)₂. L⁴¹ represents a group represented by -X⁴¹-(L⁴²-X⁴² )ᵣ-. X⁴¹ and X⁴² each independently represent an aromatic hydrocarbon ring, an aliphatic hydrocarbon ring, or a linear hydrocarbon group. L⁴² represents a single bond, an oxygen atom, a sulfur atom, or -C(R⁴¹)(R⁴²)-. R⁴¹ and R⁴² each independently represent a hydrogen atom or an alkyl group. R⁴¹ and R⁴² may be bonded to each other to form a ring. r represents an integer of 0 or more.

Z⁴¹ and Z⁴² each independently represent -OH or -N(C₂H₅)₂.

L⁴¹ represents a group represented by -X⁴¹-(L⁴²-X⁴² )ᵣ-.

Examples of L⁴¹ include the group represented by L²¹. Specifically, in -X⁴¹-(L⁴²-X⁴²)ᵣ- represented by L⁴¹, X⁴¹, L⁴², X⁴², and r have the same meanings as X²¹, L²², X²², and m, respectively, and suitable aspects thereof are also the same.

Examples of the compound C include the following compounds.

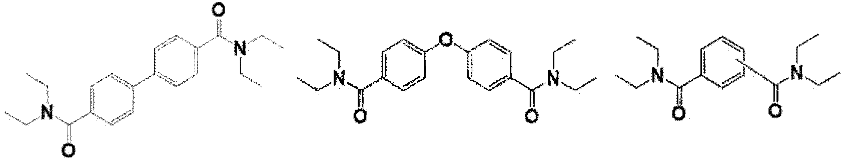

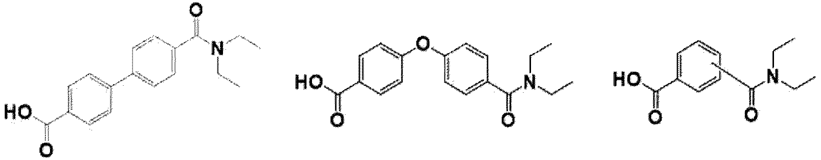

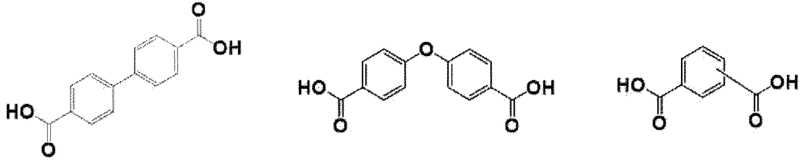

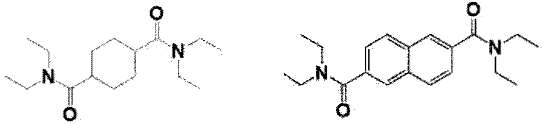

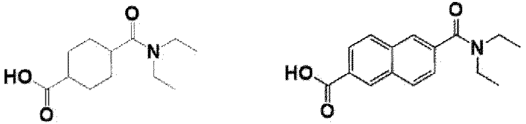

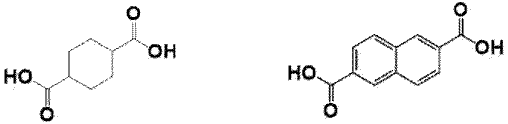

However, in a case where the polyarylate contains one of the repeating unit represented by Formula (A-II), L²¹, L³¹, and L⁴¹ represent the same group. In a case where the polyarylate contains two or more of the repeating units represented by Formula (A-II), L³¹ and L⁴¹ are selected from any of the groups constituting L²¹ in the two or more of the repeating units represented by Formula (A-II).

For example, in a case where the polyarylate contains the repeating unit A and the repeating unit B, which are corresponding to the repeating unit represented by Formula (A-II), L³¹ and L⁴¹ in Formula (B) are selected from L^{21A} in the repeating unit A and L^{21B} in the repeating unit B (L^{21A} and L^{21B}).

As L²¹, L³¹, and L⁴¹, a group represented by any of Formulae (L-1) to (L-5) or a group formed by combining these groups is preferable, and a group represented by Formula (L-1) is more preferable.

The group formed by combining these groups means a group obtained by combining two or more groups among the groups represented by any of Formulae (L-1) to (L-5). The two or more groups described above may be the same as or different from each other.

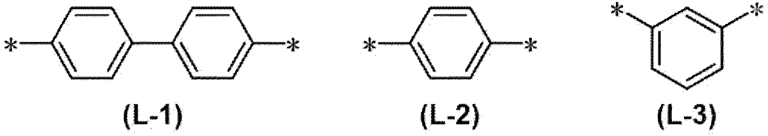

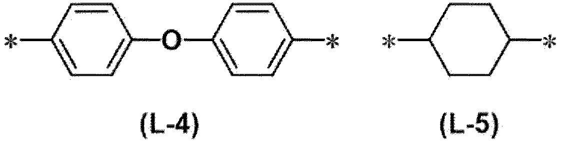

In Formulae (L-1) to (L-5), * represents a bonding position.

### <Other components>

The powder component may contain other components in addition to the above-described various components.

Examples of the other components include a residual monomer, a residual solvent, a correlation transfer catalyst, and an amine compound.

Examples of the substituent T include the following groups.

An alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, 1-carboxymethyl, and the like), an alkenyl group (preferably an alkenyl group having 2 to 20 carbon atoms, for example, vinyl, allyl, oleyl, and the like), an alkynyl group (preferably an alkynyl group having 2 to 20 carbon atoms, for example, ethynyl, butadynyl, phenylethynyl, and the like), a cycloalkyl group (preferably a cycloalkyl group having 3 to 20 carbon atoms, for example, cyclopropyl, cyclopentyl, cyclohexyl, 4-methylcyclohexyl, and the like), an aryl group (preferably an aryl group having 6 to 26 carbon atoms, for example, phenyl, 1-naphthyl, 4-methoxyphenyl, 2-chlorophenyl, 3-methylphenyl, and the like), a heterocyclic group (preferably a heterocyclic group having 2 to 20 carbon atoms and preferably a 5- or 6-membered heterocyclic group having at least one oxygen atom, one sulfur atom, or one nitrogen atom, including an aromatic heterocyclic group and an aliphatic heterocyclic group, for example, a tetrahydropyran ring group, a tetrahydrofuran ring group, 2-pyridyl, 4-pyridyl, 2-imidazolyl, 2-benzimidazolyl, 2-thiazolyl, 2-oxazolyl, and the like), an alkoxy group (preferably an alkoxy group having 1 to 20 carbon atoms, for example, methoxy, ethoxy, isopropyloxy, benzyloxy, and the like), an aryloxy group (preferably an aryloxy group having 6 to 26 carbon atoms, for example, phenoxy, 1-naphthyloxy, 3-methylphenoxy, 4-methoxyphenoxy, and the like), a heterocyclic oxy group (a group in which an -O- group is bonded to the above-described heterocyclic group), an alkoxycarbonyl group (preferably an alkoxycarbonyl group having 2 to 20 carbon atoms, for example, ethoxycarbonyl, 2-ethylhexyloxycarbonyl, and the like), an aryloxycarbonyl group (preferably an aryloxycarbonyl group having 6 to 26 carbon atoms, for example, phenoxycarbonyl, 1-naphthyloxycarbonyl, 3-methylphenoxycarbonyl, 4-methoxyphenoxycarbonyl, and the like), an amino group (preferably including an amino group, an alkylamino group, and an arylamino group, which has 0 to 20 carbon atoms, for example, amino (-NH₂), N,N-dimethylamino, N,N-diethylamino, N-ethylamino, anilino, and the like), a sulfamoyl group (preferably a sulfamoyl group having 0 to 20 carbon atoms, for example, N,N-dimethylsulfamoyl, N-phenylsufamoyl, and the like), an acyl group (including an alkylcarbonyl group, an alkenylcarbonyl group, an alkynylcarbonyl group, an arylcarbonyl group, and a heterocyclic carbonyl group, preferably an acyl group having 1 to 20 carbon atoms, for example, acetyl, propionyl, butyryl, octanoyl, hexadecanoyl, acryloyl, methacryloyl, crotonoyl, benzoyl, naphthoyl, nicotinoyl, and the like), an acyloxy group (including an alkylcarbonyloxy group, an alkenylcarbonyloxy group, an alkynylcarbonyloxy group, an arylcarbonyloxy group, and a heterocyclic carbonyloxy group, preferably an acyloxy group having 1 to 20 carbon atoms, for example, acetyloxy, propionyloxy, butyryloxy, octanoyloxy, hexadecanoyloxy, acryloyloxy, methacryloyloxy, crotonoyloxy, benzoyloxy, naphthoyloxy, nicotinoyloxy, and the like), an aryloyloxy group (preferably an aryloyloxy group having 7 to 23 carbon atoms, for example, benzoyloxy and the like), a carbamoyl group (preferably a carbamoyl group having 1 to 20 carbon atoms, for example, N,N-dimethylcarbamoyl, N-phenylcarbamoyl, and the like), an acylamino group (preferably an acylamino group having 1 to 20 carbon atoms, for example, acetylamino, benzoylamino, and the like), an alkylthio group (preferably an alkylthio group having 1 to 20 carbon atoms, for example, methylthio, ethylthio, isopropylthio, benzylthio, and the like), an arylthio group (preferably an arylthio group having 6 to 26 carbon atoms, for example, phenylthio, 1-naphthylthio, 3-methylphenylthio, 4-methoxyphenylthio, and the like) a heterocyclic thio group (a group in which an -S- group is bonded to the above-described heterocyclic group), an alkylsulfonyl group (preferably an alkylsulfonyl group having 1 to 20 carbon atoms, for example, methylsulfonyl, ethylsulfonyl, and the like), an arylsulfonyl group (preferably an arylsulfonyl group having 6 to 22 carbon atoms, for example, benzenesulfonyl and the like), an alkylsilyl group (preferably an alkylsilyl group having 1 to 20 carbon atoms, for example, monomethylsilyl, dimethylsilyl, trimethylsilyl, triethylsilyl, and the like), an arylsilyl group (preferably an arylsilyl group having 6 to 42 carbon atoms, for example, triphenylsilyl and the like), a phosphoryl group (preferably a phosphate group having 0 to 20 carbon atoms, for example, -OP(=O)(R^{P})₂), a phosphonyl group (preferably a phosphonyl group having 0 to 20 carbon atoms, for example, -P(=O)(R^{P})₂), a phosphinyl group (preferably a phosphinyl group having 0 to 20 carbon atoms, for example, -P(R^{P})₂), a sulfo group (sulfonate group), a carboxy group, a hydroxy group, a sulfanyl group, a cyano group, and a halogen atom (for example, a fluorine atom, a chlorine atom, a bromine atom, an iodine atom, and the like) are included. R^{P} represents a hydrogen atom or a substituent (preferably, the substituent shown as an example by the substituent T).

In addition, the substituent shown as an example by these substituents T may further have a substituent shown as an example by the above-described substituent T.

### [Resin composition for coating]

The resin composition for coating according to the embodiment of the present invention contains the above-described powder component and a solvent.

The powder component is as described above.

Examples of the solvent include water and an organic solvent, and an organic solvent is preferable.

Examples of the organic solvent include chlorine-based solvents such as dichloromethane, 1,2-dichloroethane, chloroform, carbon tetrachloride, chlorobenzene, 1,1,2,2-tetrachloroethane, 1,1,1-trichloroethane, o-dichlorobenzene, and m-dichlorobenzene; aromatic hydrocarbon-based solvents such as toluene, benzene, and xylene; N-methyl-2-pyrrolidone, N,N-dimethylacetamide, 1,4-dioxane, and tetrahydrofuran; and tetrahydrofuran is preferable.

The solvent may be used alone or in combination of two or more kinds thereof.

The content of the solvent can be appropriately adjusted.

The resin composition for coating may contain other additives in addition to the above-described various components. Examples of the other additives include known additives.

### [Manufacturing method of powder component]

The manufacturing method of the powder component according to the embodiment of the present invention is not particularly limited, and a known method can be used.

Examples of a manufacturing method of the polyarylate include a known manufacturing method of a polyarylate.

Specific examples thereof include an interfacial polymerization of a divalent carboxylic acid halide and a dihydric phenol.

The above-described interface polymerization is preferably a method of adding a mixed solution or slurry, which contains the divalent carboxylic acid halide and an organic solvent to an alkaline aqueous solution containing the dihydric phenol, or a method of directly adding a solid such as a powder of the divalent carboxylic acid halide to a mixture that contains the alkaline aqueous solution containing the dihydric phenol, the polymerization catalyst, and the organic solvent of the organic layer.

In the present invention, the "solid such as a powder of a divalent carboxylic acid halide" means a state in which the solvent is not substantially contained, and means a solid divalent carboxylic acid halide. A content of the solvent is preferably 5% by mass or less and more preferably 1% by mass or less with respect to the whole mass of the divalent carboxylic acid halide. The lower limit is usually 0% by mass or more with respect to the whole mass of the divalent carboxylic acid halide.

The powder component according to the embodiment of the present invention may be prepared by mixing the polyarylate manufactured by the above-described procedure and a compound represented by Formula (B) which is separately manufactured.

In addition, the polyarylate and the compound represented by Formula (B) may be manufactured at the same time by adjusting the manufacture conditions of the above-described polyarylate.

In addition to the above, the manufacturing method of the powder component may include other steps.

Examples of the other steps include a raw material purification step and a powder component purification step.

The raw material purification step is a step of purifying a raw material used as a raw material for the powder component. The above-described purification method may use a known purification method.

In addition, the powder component purification step is a step of purifying the powder component after obtaining the powder component. For example, a purification method of dissolving the obtained powder component in a good solvent such as tetrahydrofuran and then adding a poor solvent such as methanol to re-precipitate the powder component is preferable.

The above-described raw material purification step and the above-described powder component purification step are preferably carried out from the viewpoint that the content of the compound B and the content of the compound C can be adjusted.

The other steps may be used alone or in combination of two or more kinds thereof. The other step may be carried out once or twice or more.

### [Coating film]

The coating film is a film formed of the above-described resin composition for coating.

The coating film preferably contains various components which can be contained in the coating resin composition other than the solvent.

The coating film may be a coating film composited with a functional material. Examples of the coating film composited with the functional material include a low moisture permeable film described in JP2016-069468A. The low moisture permeable film is a film in which, by adding a phenol compound as a functional material to a polyarylate, the polyarylate and the functional material exhibit high compatibility with each other, and moisture permeability can be effectively suppressed.

The coating film is also suitably used, for example, as a metal wire protective film and a polarizing plate protective film for a display device.

The coating film may be used in a state in which another layer is disposed thereon. For example, the durability can be further enhanced by forming the protective layer in contact with the coating film.

A method of forming the coating film is not particularly limited as long as it is a method of forming the coating film using the above-described resin composition for coating. For example, the resin composition for coating may be applied onto the substrate, and the coating film may be formed by drying the applied film. Examples of the applying method and the drying method include a known applying method using a coating liquid and a known drying method of an applied film. The base material is not particularly limited, and a material or a member having a surface to be coated can be widely applied.

### Examples

Hereinafter, the present invention will be more specifically described based on the examples, but the present invention is not limited to the following examples.

### [Powder component]

### <Powder component A-1>

A powder component A-1 was produced by the following experimental procedure. The powder component A-1 corresponds to Examples.

Methylene chloride (manufactured by FUJIFILM Wako Pure Chemical Corporation) (260 mL) was added to 2,2-bis(4-hydroxyphenyl)-4-methylpentane (manufactured by Honshu Chemical Industry Co.,Ltd.) (43.10 g) and triethylamine (manufactured by FUJIFILM Wako Pure Chemical Corporation) (33.06 g) in a reaction container provided with a stirring device to prepare a solution. 4,4'-biphenyldicarbonyl chloride (HPLC purity: 99.5%) (45.00 g) was added to the solution in a powder form at a temperature of 5°C with stirring. After the addition was completed, the temperature of the solution was raised to 30°C, and the solution was stirred for 4 hours in a nitrogen atmosphere to cause the polymerization reaction to proceed.

Furthermore, the following purification treatment was performed on the solution after the polymerization. The obtained solution was further diluted with tetrahydrofuran (3,000 mL), and then methanol was added to the solution to precipitate components containing polyarylate. The precipitated component containing the polyarylate was filtered, washed with methanol, and dried at 50°C. The obtained component containing the polyarylate was re-dissolved in tetrahydrofuran (3,000 mL), and then methanol was added thereto to re-precipitate the component containing the polyarylate. The precipitated component containing the polyarylate was filtered, washed with methanol, and dried at 50°C, thereby obtaining a powder component A-1 (68.9 g) containing the polyarylate A-1.

The measured value 1 and the measured value 2 were calculated according to the procedure described later using the powder component A-1, and the X value was obtained by subtracting the measured value 1 from the measured value 2. The compound C in a case of calculating the measured value 2 compounds a compound C1-1 to C1-3, which will be described later.

To obtain the measurement value 1, the powder component A-1 (50 mg) was dissolved in tetrahydrofuran (2 mL). Thereafter, methanol was added thereto to make the volume 10 mL, and the supernatant obtained by re-precipitating the polyarylate A-1 was filtered through a filter to obtain a filtrate. Using the obtained filtrate, in HPLC analysis, an ODS column is used as a separation column, water containing phosphoric acid and acetonitrile are used as an eluent, and a sample injection amount is 10 µL. A photodiode array detector was used as the detection device, and the detection was carried out at a detection wavelength of 254 nm. According to the above-described procedure, the total mass of the compounds C1-1 to C1-3 was calculated, and the proportion (%) of the total mass of the compounds C1-1 to C1-3 to the whole mass of the powder component was obtained as a measured value 1.

To obtain the measurement value 2, the powder component (50 mg) was dissolved in tetrahydrofuran (2 mL), and then diethylamine (10 µL) was added thereto. Thereafter, methanol was added thereto to make the volume 10 mL, and the supernatant obtained by re-precipitating the polyarylate A-1 was filtered through a filter to obtain a filtrate. Using the obtained filtrate, in HPLC analysis, an ODS column is used as a separation column, water containing phosphoric acid and acetonitrile are used as an eluent, and a sample injection amount is 10 µL. A photodiode array detector was used as the detection device, and the detection was carried out at a detection wavelength of 254 nm. According to the above-described procedure, the total mass of the compounds C1-1 to C1-3 in the mixture obtained by mixing the powder component and the diethylamine was obtained, and the proportion of the total mass of the compounds C1-1 to C1-3 to the whole mass of the powder component (in the above-described case, 50 mg) was obtained and defined as the measured value 2.

The polyarylate A-1, the repeating unit represented by Formula (B) contained in the compound B-1, and the compounds C1-1 to C1-3 are shown below.

The unit of the numerical value of the subscript in parentheses in the polyarylate A-1 is mol%.

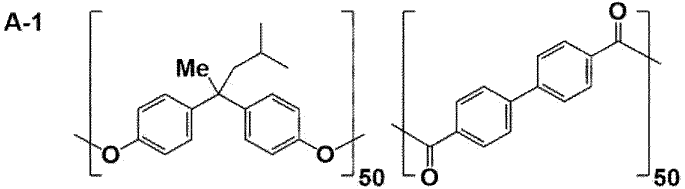

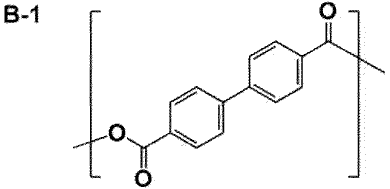

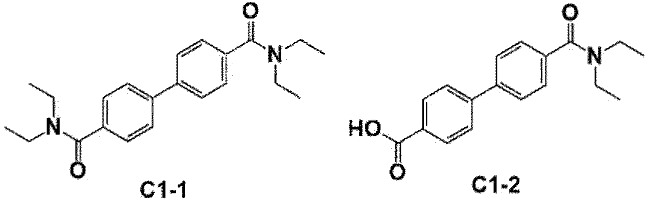

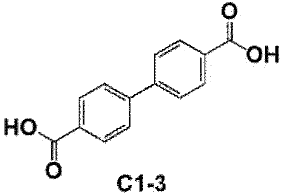

### <Powder component A-2>

A powder component A-2 was produced by the following experimental procedure. The powder component A-2 corresponds to Examples.

Methylene chloride (manufactured by FUJIFILM Wako Pure Chemical Corporation) (260 mL) was added to 2,2-bis(4-hydroxyphenyl)-4-methylpentane (manufactured by Honshu Chemical Industry Co.,Ltd.) (43.11 g) and triethylamine (manufactured by FUJIFILM Wako Pure Chemical Corporation) (33.06 g) in a reaction container provided with a stirring device to prepare a solution. 4,4'-biphenyldicarbonyl chloride (HPLC purity: 99.0%) (45.23 g) was added to the solution in a powder form at a temperature of 5°C with stirring. After the addition was completed, the temperature of the solution was raised to 30°C, and the solution was stirred for 4 hours in a nitrogen atmosphere to cause the polymerization reaction to proceed.

Furthermore, the following purification treatment was performed on the solution after the polymerization. The obtained solution was further diluted with tetrahydrofuran (3,000 mL), and then methanol was added to the solution to precipitate components containing polyarylate. The precipitated component containing the polyarylate was filtered, washed with methanol, and dried at 50°C. The obtained component containing the polyarylate was re-dissolved in tetrahydrofuran (3,000 mL), and then methanol was added thereto to re-precipitate the component containing the polyarylate. The precipitated component containing the polyarylate was filtered, washed with methanol, and dried at 50°C, thereby obtaining a powder component A-2 (68.0 g) containing the polyarylate A-2.

Using the powder component A-2, the X value was obtained by subtracting the measured value 1 from the measured value 2 by the same procedure as in the measurement with the powder component A-1. The compound C in a case of calculating the measured value 2 compounds a compound C2-1 to C2-3, which will be described later.

The polyarylate A-2, the repeating unit represented by Formula (B) contained in the compound B-2, and the compounds C2-1 to C2-3 are shown below.

The unit of the numerical value of the subscript in parentheses in the polyarylate A-2 is mol%.

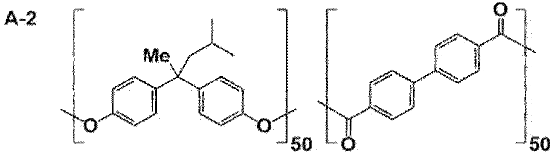

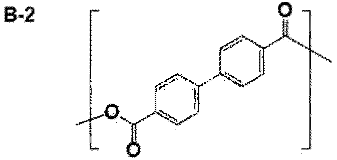

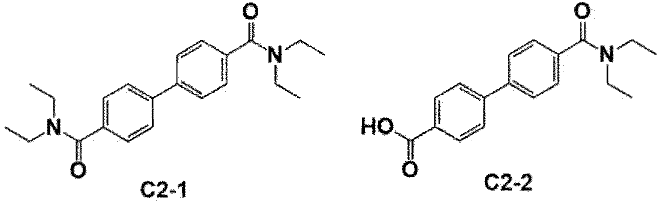

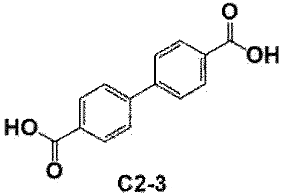

### <Powder component A-3>

A powder component A-3 was produced by the following experimental procedure. The powder component A-3 corresponds to Examples.

Methylene chloride (manufactured by FUJIFILM Wako Pure Chemical Corporation) (260 mL) was added to 2,2-bis(4-hydroxyphenyl)-4-methylpentane (manufactured by Honshu Chemical Industry Co.,Ltd.) (43.10 g) and triethylamine (manufactured by FUJIFILM Wako Pure Chemical Corporation) (33.06 g) in a reaction container provided with a stirring device to prepare a solution. 4,4'-biphenyldicarbonyl chloride (HPLC purity: 98.5%) (45.46 g) was added to the solution in a powder form at a temperature of 5°C with stirring. After the addition was completed, the temperature of the solution was raised to 30°C, and the solution was stirred for 4 hours in a nitrogen atmosphere to cause the polymerization reaction to proceed.

Furthermore, the following purification treatment was performed on the solution after the polymerization. The obtained solution was further diluted with tetrahydrofuran (3,000 mL), and then methanol was added to the solution to precipitate components containing polyarylate. The precipitated component containing the polyarylate was filtered, washed with methanol, and dried at 50°C. The obtained component containing the polyarylate was re-dissolved in tetrahydrofuran (3,000 mL), and then methanol was added thereto to re-precipitate the component containing the polyarylate. The precipitated component containing the polyarylate was filtered, washed with methanol, and dried at 50°C, thereby obtaining a powder component A-3 (67.5 g) containing the polyarylate A-3.

Using the powder component A-3, the X value was obtained by subtracting the measured value 1 from the measured value 2 by the same procedure as in the measurement with the powder component A-1. The compound C in a case of calculating the measured value 2 compounds a compound C3-1 to C3-3, which will be described later.

The polyarylate A-3, the repeating unit represented by Formula (B) contained in the compound B-3, and the compounds C3-1 to C3-3 are shown below.

The unit of the numerical value of the subscript in parentheses in the polyarylate A-3 is mol%.

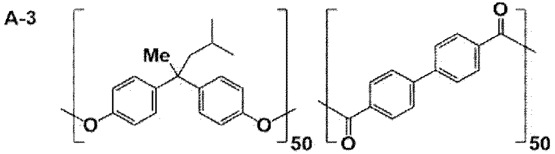

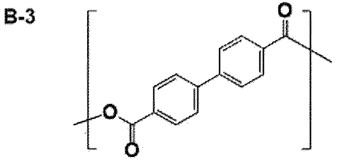

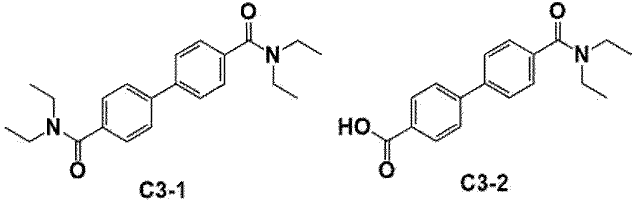

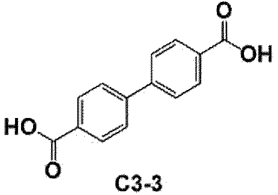

### <Powder component A-4>

2,2-bis(4-hydroxyphenyl)-4-methylpentane (manufactured by Honshu Chemical Industry Co., Ltd.) (11.45 g), 2,3,5-trimethylphenol (manufactured by Tokyo Chemical Industry Co., Ltd.) (0.1750 g), sodium hydrosulfite (manufactured by FUJIFILM Wako Pure Chemical Corporation) (0.0572 g), and water (230 mL) were charged into a reaction container equipped with a stirrer to form a suspension. Sodium hydroxide (manufactured by FUJIFILM Wako Pure Chemical Corporation) (4.8378 g), benzyltributylammonium chloride (manufactured by FUJIFILM Wako Pure Chemical Corporation) (0.1981 g), and water (150 mL) were added to the suspension with stirring at a temperature of room temperature (20°C), and the mixture was stirred for 30 minutes under a nitrogen atmosphere to obtain a solution in which the solids were mostly dissolved (there was some turbidity). Dichloromethane (manufactured by FUJIFILM Wako Pure Chemical Corporation) (210 mL) was added to the aqueous solution, the mixture was stirred for 30 minutes under a nitrogen atmosphere, and then 4,4'-biphenyldicarbonyl chloride (HPLC purity: 99.5%) (12.00 g) was added thereto in a powder form. After completion of the addition, the temperature was set to room temperature (20°C), and the mixture was stirred for 4 hours under a nitrogen atmosphere to cause a reaction to proceed. The solution after the polymerization was diluted with dichloromethane (300 mL), and the aqueous phase was removed. After washing with a dilute acetic acid solution and ion exchange water, the resultant was poured into methanol (manufactured by FUJIFILM Wako Pure Chemical Corporation) to precipitate a component containing polyarylate. The precipitated component containing the polyarylate was filtered and dried at 50°C. The component containing the polyarylate was re-dissolved in tetrahydrofuran (manufactured by FUJIFILM Wako Pure Chemical Corporation) (900 mL), and the methanol was added thereto to precipitate the component containing the polyarylate. The precipitated component including the polyarylate was filtered, washed with methanol, and dried at 50°C to obtain a powder component A-4 (17.7 g) including a polyarylate A-4.

Using the powder component A-4, the X value was obtained by subtracting the measured value 1 from the measured value 2 by the same procedure as in the measurement with the powder component A-1. The compound C in a case of calculating the measured value 2 compounds a compound C4-1 to C4-3, which will be described later.

The polyarylate A-4, the repeating unit represented by Formula (B) contained in the compound B-4, and the compounds C4-1 to C4-3 are shown below.

The unit of the numerical value of the subscript in parentheses in the polyarylate A-4 is mol%.

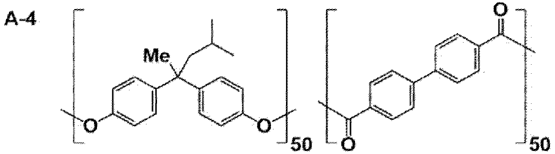

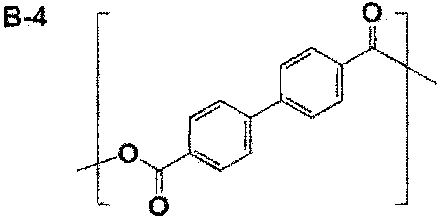

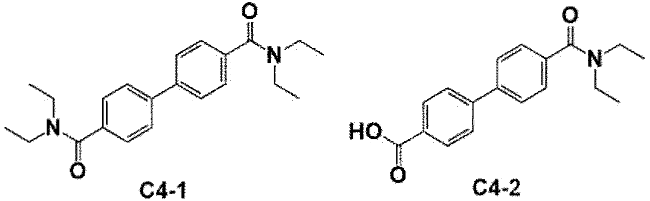

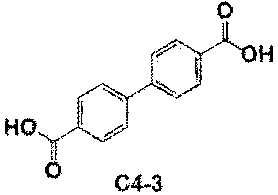

### <Powder components A-5 to A-8>

Powder components A-5 to A-8 were prepared by the same procedure as in the powder component A-1. The powder components A-5 to A-8 each contained the compound B-5 to B-8.

Using each powder component, an X value was obtained for each compound C by subtracting the measurement value 1 from the measurement value 2 in the same procedure as in the measurement of the powder component A-1.

Hereinafter, each polyarylate A, each repeating unit represented by the Formula (B) contained in the compound B, and each compound C will be shown.

The unit of the numerical value of the subscript in parentheses in each polyarylate A is mol%.

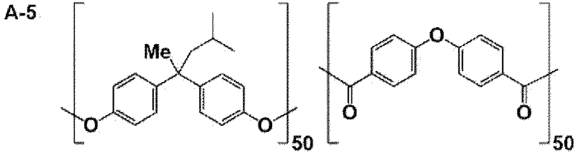

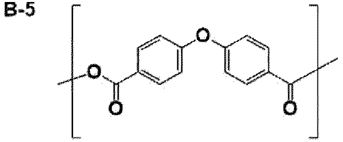

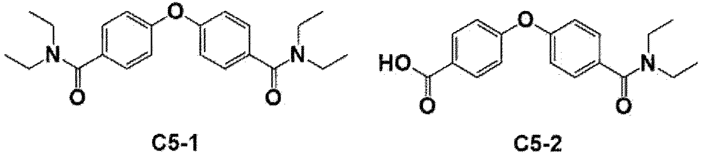

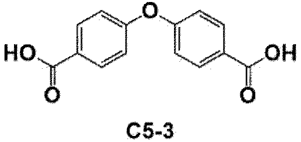

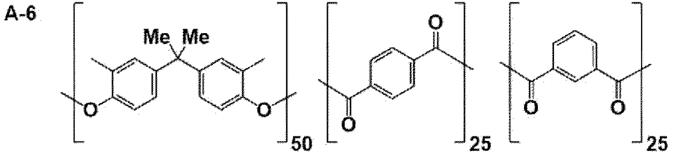

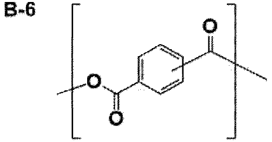

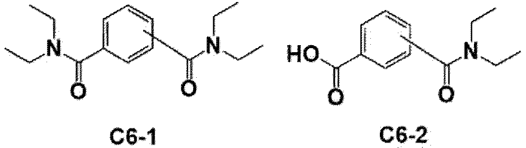

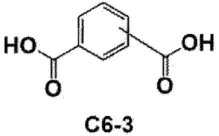

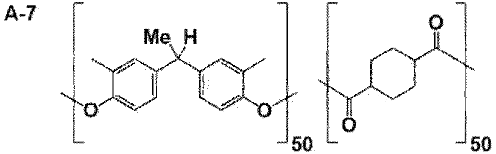

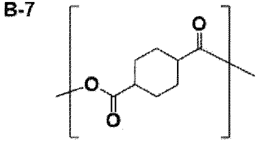

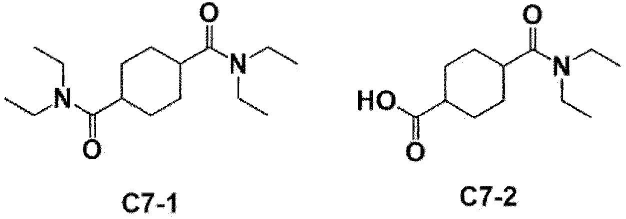

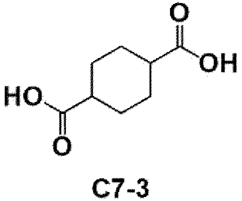

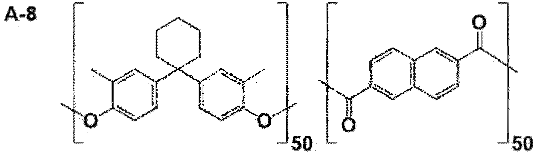

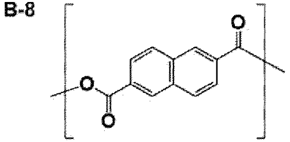

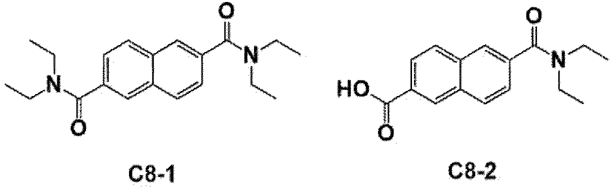

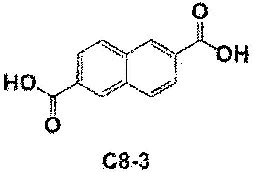

### -Powder component A-9-

A powder component A-9 was produced by the following experimental procedure. The powder component A-9 corresponds to Comparative Examples.

Methylene chloride (manufactured by FUJIFILM Wako Pure Chemical Corporation) (260 mL) was added to 2,2-bis(4-hydroxyphenyl)-4-methylpentane (manufactured by Honshu Chemical Industry Co.,Ltd.) (43.10 g) and triethylamine (manufactured by FUJIFILM Wako Pure Chemical Corporation) (33.06 g) in a reaction container provided with a stirring device to prepare a solution. 4,4'-biphenyldicarbonyl chloride (HPLC purity: 98.0%) (45.69 g) was added to the solution in a powder form at a temperature of 5°C with stirring. After the addition was completed, the temperature of the solution was raised to 30°C, and the solution was stirred for 4 hours in a nitrogen atmosphere to cause the polymerization reaction to proceed.

Furthermore, the following purification treatment was performed on the solution after the polymerization. The obtained solution was further diluted with tetrahydrofuran (3,000 mL), and then methanol was added to the solution to precipitate components containing polyarylate. The precipitated component containing the polyarylate was filtered, washed with methanol, and dried at 50°C. The obtained component containing the polyarylate was re-dissolved in tetrahydrofuran (3,000 mL), and then methanol was added thereto to re-precipitate the component containing the polyarylate. The precipitated component including the polyarylate was filtered, washed with methanol, and dried at 50°C to obtain a powder component A-9 (69.2 g) including a polyarylate A-9.

Using the powder component A-9, the X value was obtained by subtracting the measured value 1 from the measured value 2 by the same procedure as in the measurement with the powder component A-1. The compound C in a case of calculating the measured value 2 compounds a compound C9-1 to C9-3, which will be described later.

The polyarylate A-9, the repeating unit represented by Formula (B) contained in the compound B-9, and the compounds C9-1 to C9-3 are shown below.

The unit of the numerical value of the subscript in parentheses in the polyarylate A-9 is mol%.

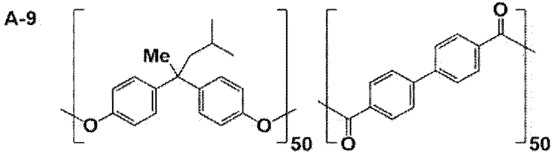

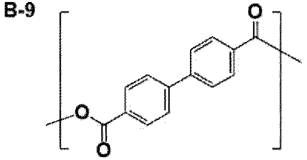

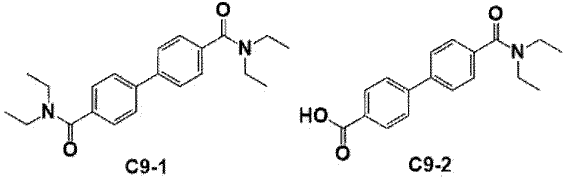

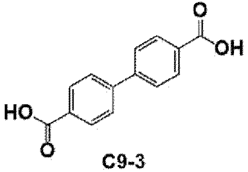

### [Preparation of resin composition for coating and production of coating film]

The obtained each powder component A-1 to A-9 (1,200 mg) and tetrahydrofuran (manufactured by FUJIFILM Wako Pure Chemical Corporation) (18 g) were mixed with each other to prepare each resin composition for coating. Each resin composition for coating was added dropwise to a petri dish and dried. The obtained coating film having a film thickness of 10 to 50 µm was peeled off from the petri dish to prepare an evaluation sample.

### [Evaluation]

### <Evaluation of transparency>

The obtained sample for evaluation was visually observed, and the presence or absence of haze and turbidity was confirmed to evaluate the transparency. In addition, the sample for evaluation was placed in a blast constant temperature incubator set at 170°C, and was heat-treated for 15 minutes in an air atmosphere. Thereafter, the haze and turbidity of the sample for evaluation were visually observed.
A: regardless of the heat treatment at 170°C, there was no haze or turbidity.
B: only in a case of the heat treatment at 170°C, there was haze or turbidity.
C: haze or turbidity was observed from before the heat treatment at 170°C.

### <Evaluation of heat resistance>

Using a differential thermal/thermogravimetric simultaneous measurement device (TG/DTA), in a case where the mass of the sample for evaluation before heating and the mass of the sample for evaluation after heating to 200°C were compared, a rate of decrease in mass of the sample for evaluation after heating was measured to evaluate heat resistance. The sample for evaluation was placed in an aluminum pan, and was measured while being heated at 10°C/min in a nitrogen atmosphere.
A: rate of decrease in mass at 200°C was less than 0.5% by mass.
B: rate of decrease in mass at 200°C was 0.5% by mass or more.

In the table, the "X value" is a value obtained by subtracting the measured value 1 from the measured value 2.

"Mw" indicates a weight-average molecular weight of the polyarylate. The above-described weight-average molecular weight is a molecular weight in terms of polystyrene as measured by gel permeation chromatography (GPC).

In the measurement method of the measured value 2 in a case of measuring the X value, the analysis such as GPC and nuclear magnetic resonance (NMR) showed that the polyarylate was not decomposed. Therefore, the compound C was not a decomposition product derived from polyarylate.

**[Table 1]**

| | | Example 1 | Example 2 | Example 3 | Example 4 | Example 5 | Example 6 | Example 7 | Example 8 | Comparative Example 1 |
|---|---|---|---|---|---|---|---|---|---|---|
| Powder component | Type | A-1 | A-2 | A-3 | A-4 | A-5 | A-6 | A-7 | A-8 | A-9 |
| Polyarylate | Type | A-1 | A-2 | A-3 | A-4 | A-5 | A-6 | A-7 | A-8 | A-9 |
| | Mw | 125,000 | 100,000 | 90,000 | 135,000 | 80,000 | 100,000 | 70,000 | 50,000 | 60,000 |
| X value | ppm by mass | 500 | 1,000 | 2,000 | 100 | 200 | 100 | 300 | 400 | 3,000 |
| Evaluation result | Transparency | A | B | B | A | A | B | A | B | C |
| | Heat resistance | A | A | B | A | A | A | B | B | B |

From the results in the table, it was confirmed that the powder component according to the embodiment of the present invention had excellent transparency of the obtained film.

In a case where the X value was 1,000 ppm by mass or less, it was confirmed that the heat resistance was more excellent (Examples 1 to 5). In addition, from the same comparison, it was confirmed that, in a case where the X value was 500 ppm by mass or less, the heat resistance and the transparency were more excellent.

## Claims

1. A powder component comprising:
a polyarylate containing a repeating unit represented by Formula (A-I) and a repeating unit represented by Formula (A-II); and
a compound that is different from the polyarylate and has a repeating unit represented by Formula (B),
wherein a value obtained by subtracting a measured value 1 from a measured value 2 is 2,000 ppm by mass or less,
the measured value 1: a proportion of a mass of a compound represented by Formula (C) in the powder component with respect to a whole mass of the powder component,
the measured value 2: a proportion of the mass of the compound represented by Formula (C) in a mixture obtained by mixing the powder component with diethylamine with respect to the whole mass of the powder component, 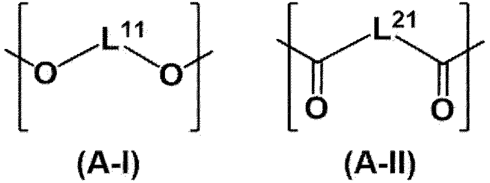
in Formula (A-I), L¹¹ represents a group represented by -Ar¹¹-(L¹²-Ar¹² )ₙ-, Ar¹¹ and Ar¹² each independently represent an aromatic hydrocarbon ring, L¹² represents a single bond, an oxygen atom, a sulfur atom, or -C(R¹¹)(R¹²)-, R¹¹ and R¹² each independently represent a hydrogen atom, an alkyl group, or an aryl group, R¹¹ and R¹² may be bonded to each other to form a ring, n represents an integer of 1 or more,
in Formula (A-II), L²¹ represents a group represented by -X²¹-(L²²-X²2)ₘ-, X²¹ and X²² each independently represent an aromatic hydrocarbon ring, an aliphatic hydrocarbon ring, or a linear hydrocarbon group, L²² represents a single bond, an oxygen atom, a sulfur atom, or - C(R²¹)(R²²)-, R²¹ and R²² each independently represent a hydrogen atom or an alkyl group, R²¹ and R²² may be bonded to each other to form a ring, m represents an integer of 0 or more, 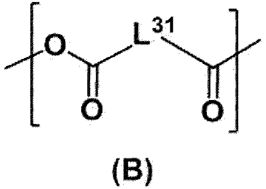
in Formula (B), L³¹ represents a group represented by -X³¹-(L³²-X³²)_{q}-, X³¹ and X³² each independently represent an aromatic hydrocarbon ring, an aliphatic hydrocarbon ring, or a linear hydrocarbon group, L³² represents a single bond, an oxygen atom, a sulfur atom, or - C(R³¹)(R³²)-, R³¹ and R³² each independently represent a hydrogen atom or an alkyl group, R³¹ and R³² may be bonded to each other to form a ring, q represents an integer of 0 or more, 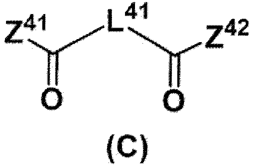
in Formula (C), Z⁴¹ and Z⁴² each independently represent -OH or -N(C₂H₅)₂, L⁴¹ represents a group represented by -X⁴¹-(L⁴²-X⁴²)ᵣ-, X⁴¹ and X⁴² each independently represent an aromatic hydrocarbon ring, an aliphatic hydrocarbon ring, or a linear hydrocarbon group, L⁴² represents a single bond, an oxygen atom, a sulfur atom, or -C(R⁴¹)(R⁴²)-, R⁴¹ and R⁴² each independently represent a hydrogen atom or an alkyl group, R⁴¹ and R⁴² may be bonded to each other to form a ring, r represents an integer of 0 or more,
provide that in a case where the polyarylate contains one of the repeating unit represented by Formula (A-II), L²¹, L³¹, and L⁴¹ represent the same group, or in a case where the polyarylate contains two or more of the repeating units represented by Formula (A-II), L³¹ and L⁴¹ are selected from any of the groups constituting L²¹ in the two or more of the repeating units represented by Formula (A-II).

2. The powder component according to claim 1,
wherein L²¹, L³¹, and L⁴¹ are a group represented by any of Formulae (L-1) to (L-5) or a group formed by a combination of the groups, 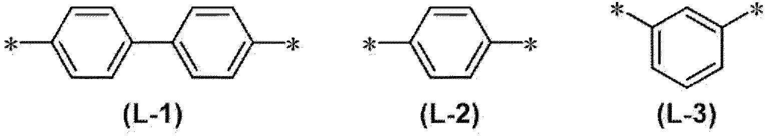 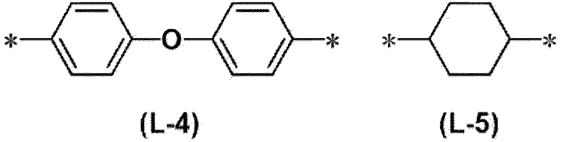
in Formulae (L-1) to (L-5), * represents a bonding position.

3. The powder component according to claim 2,
wherein L²¹, L³¹, and L⁴¹ are the group represented by Formula (L-1).

4. A resin composition for coating, comprising:
the powder component according to any one of claims 1 to 3; and
a solvent.

5. A coating film formed of the resin composition for coating according to claim 4.
